# EUROPEAN PATENT APPLICATION

(11) **EP 1 617 247 A2**
(43) Date of publication of application: **18.01.2006**
(21) Application number: 05380139.5
(22) Date of filing: 29.06.2005
(51) Int. Cl.: G02B 17/08, H01L 33/00

(54) **Internally reflecting collimator lens**

(30) Priority: 14.07.2004 ES 200401711 U
(71) Applicant: Federal Signal Vama, S.A., 08339 Vilassar de Dalt Barcelona (ES)
(72) Inventor: Bastus Torrens, José, 08339 Vilassar de Dalt (Barcelona) (ES)
(74) Representative: Ungria Lopez, Javier

(57) **Abstract**

It presents the shape of a funnel, with an led diode (4) in its smaller base which emits light towards the side wall, reflecting it towards the outside as a beam of parallel rays.

The side wall is staggered externally and forms various reflecting surfaces (2,3) of the light, which produces a greater light emission amplitude for the same height of collimator (1).

## Description

### OBJECT OF THE INVENTION

As stated in the title of this specification, the present invention concerns an internal reflecting collimator lens which presents notable relevant and advantageous features compared to those currently existing and which can be regarded as being of its type.

It is an object of the invention to succeed in expanding the reflecting surface of the light on the side wall, without excessively increasing the depth of the lens.

### PRIOR ART OF THE INVENTION

Light collimator lenses currently consist of a body with the general shape of a funnel, whose lower base of less diameter contains a led diode.

Starting from the appropriate internal geometry of the collimator lens, the light created by the led diode is emitted towards the side wall of the collimator, where it is reflected towards the outside in order to create the desired illumination.

Present-day collimators present a single side reflecting surface for the light generated by the led diode in order to emit it to the outside.

### DESCRIPTION OF THE INVENTION

In general terms, the internal reflecting collimator lens forming the object of the invention presents, as the basic feature in its structure, the formation of several light reflecting surfaces on its side wall. According to this, the external truncated conical surface of the lens presents one or more staggers for producing parallel out of phase paths of its surface towards the outside, thereby notably increasing the reflection of the light emitted by the diode.

With this construction, as there exist several reflecting surfaces in order to achieve a greater light emission amplitude, the height of the collimator can be maintained, or even be lesser than that required for a conventional collimator lens.

A further feature of the invention lies in the fact that the conventional general truncated conical shape of the collimator undergoes a change of shape at its edge, taking on a contour that is almost square due to the fact that the edge is submitted to four millings in two perpendicular directions. This causes a reduction in the dead zone for light emission made up of between two or more collimators in order to form a spotlight, furthermore obtaining a total light emission surface that is more homogenous.

Bearing the above in mind, we can summarise the advantages presented by the invention, among which the following stand out:
- Saving of collimators in the mounting of a spotlight, due to the increase in the emission amplitude of the light towards the outside.
- Using this type of collimator, spotlights of smaller dimensions can be obtained since the height of the collimator is less than that of another providing the same emission amplitude of the light towards the outside.
- The fairly squared shape of its upper or free edge causes a reduction in the dead zones of light emission formed between two adjacent collimators. In this way, a light emission surface that is more homogeneous and with fewer dark zones can be obtained.

In order to facilitate the understanding of these features of the invention and forming an integral part of this specification, some sheets of drawings are attached in which, by way of illustration only and not limiting, the following has been represented:

### BRIEF DESCRIPTION OF THE DRAWINGS

**Figure 1** is a perspective view of an internal reflecting collimator lens forming the object of the invention.
**Figure 2** is an elevation section, along a diametric plane, of the same lens, including the light emitting led diode. The height of the collimator lens is compared with that which a conventional collimator would have for achieving the same light emission amplitude.
**Figure 3** is an elevation section of the same collimator lens of Figure 2 but in a position rotated through 1/8 of a turn.
**Figure 4** is a lower plan view of the same lens.
**Figure 5** is a sectioned view, similar to Figure 2, comparing the amplitude of the light emitting spotlight with that which would be obtained from a conventional collimator of the same height.

### DESCRIPTION OF THE PREFERRED EMBODIMENT

Making reference to the numbering adopted in the figures, we can see how the internal reflecting collimator lens, which the invention proposes, is referenced in general with number **1** and includes two reflecting surfaces **2** and 3 for the light generated by the led diode **4** which is mounted in the cavity **5** of the lower base of the general truncated conical shape of the collimator lens **1**.

The truncated conical surface **3** is formed following a staggering directed towards the outside, with respect to the initial truncated conical surface **2**, both surfaces **2** and **3** being out of phase in the parallel direction.

The internal surface of the collimator lens **1** is referenced with number **6** and defined in its base there is a spherical bulge **7**.

The reference **8** refers to an annular wall that descends by way of a cylindrical skirt from the transition zone or stagger between the truncated conical reflecting surfaces **2** and **3**.

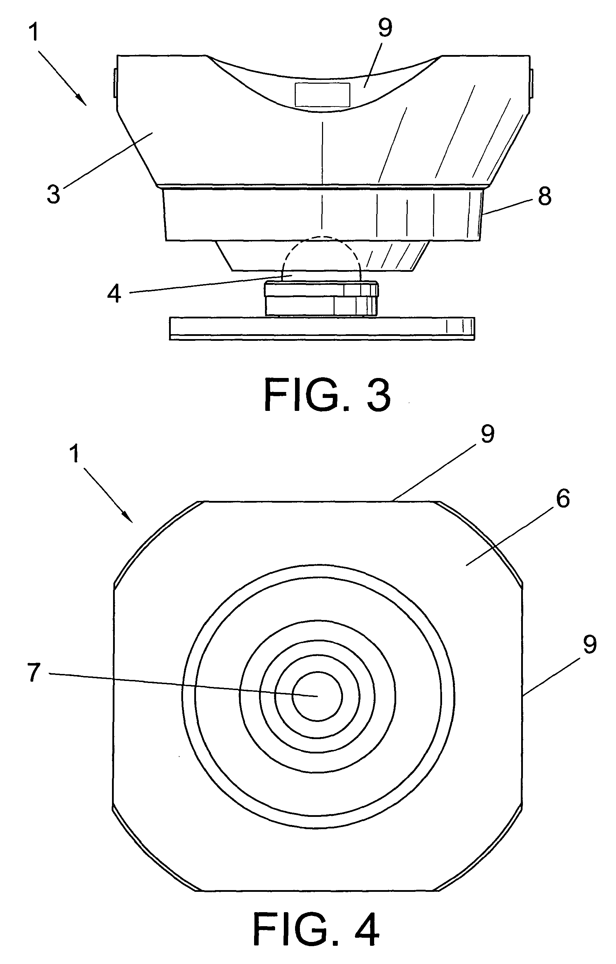

We can see that the free edge of the bell-shaped form which is circular in conventional collimator lenses undergoes four millings, in parallel, two by two, which affect the side wall of the lens, thereby forming the four surfaces with the general form of a circular segment, with the virtual straight side also defined by a concave arc, as can be seen more clearly in figure 3 which represents an elevation view of this collimator lens **1**. These milled surfaces are referenced with number **9**.

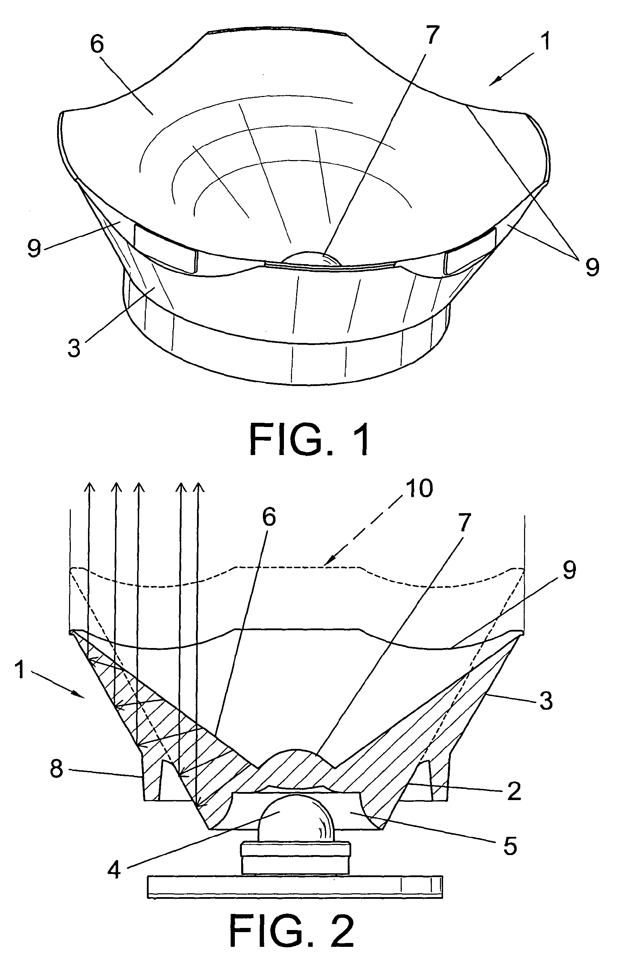

In the conventional collimator lens, or the one which we are concerned with and which constitutes the object of the invention, a beam of divergent rays emitted by the led diode **4** is transformed into another beam of parallel rays, as shown in figure **2**, where some of these rays have been partially shown. Comparing the light emission amplitude obtained with the collimator lens **1** forming the object of this invention with the conventional lens shown with dashed lines and referenced in general with number **10** of this figure 2, we can deduce that, for the latter to have the same light emission amplitude as the former, the lens needs to have a much greater height since it only has one light reflecting surface. This single light reflecting surface would of course be the extension of the initial reflecting section **2** of the collimator lens 1.

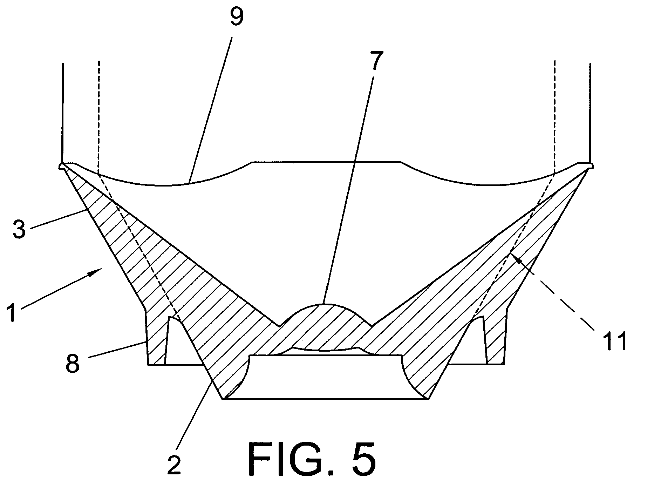

Making special reference now to figure 5, the reference **11** designates a conventional collimator lens, shown with dashed lines and a single reflecting surface, in comparison with the collimator lens 1 which, according to the present invention, presents two reflecting surfaces **2** and **3**, in this example of embodiment shown in the figures. It can be seen that the collimator **11**, having the same height as the collimator **1**, has a light emission amplitude that is notably inferior.

## Claims

1. **INTERNAL REFLECTING COLLIMATOR LENS**, of the type which presents the shape of a funnel, with an led diode provided in its smaller base, which emits light towards the side wall, reflecting it towards the outside according to a beam of parallel rays, **characterised in that** it includes several reflecting surfaces **(2, 3)** of the light on its side wall, due to the parallel displacement towards the outside of the external truncated conical surface, forming one or more staggers, which produces a greater light emission amplitude for the same height of the collimator (**1**).

2. **INTERNAL REFLECTING COLLIMATOR LENS**, according to claim 1, **characterised in that** the outside surface of the side wall presents in its annular edge four milled surfaces **(9)** in two perpendicular directions, which defines a general square shape permitting a reduction of dead or dark zones when various units are grouped together in order to form a larger light emission surface.
